# EUROPEAN PATENT APPLICATION

(11) **EP 4 685 681 A2**
(43) Date of publication of application: **28.01.2026**
(21) Application number: 25204768.3
(22) Date of filing: 25.09.2025
(51) Int. Cl.: G06F 21/60, G06N 3/063, G06N 3/08

(54) **METHOD AND APPARATUS FOR ENCRYPTING MODEL, ELECTRONIC DEVICE, AND COMPUTER-READABLE STORAGE MEDIUM**

(30) Priority: 21.07.2025 CN 202511005692
(71) Applicant: XG TECH PTE. LTD., Singapore 179098 (SG)
(72) Inventor: CAO, Feixiang, 179098 Singapore (SG); MAO, Yunjie, 179098 Singapore (SG); LU, Yawei, 179098 Singapore (SG); LIAO, Ruochen, 179098 Singapore (SG); LI, Mengchen, 179098 Singapore (SG)
(74) Representative: v. Bezold & Partner Patentanwälte - PartG mbB

(57) **Abstract**

Disclosed are a method and apparatus for encrypting a model, an electronic device, and a computer-readable storage medium. The method includes: determining at least one to-be-encrypted operator in a neural network model; determining a to-be-encrypted data volume corresponding to a respective to-be-encrypted operator of the at least one to-be-encrypted operator based on a data volume adjustment coefficient and a total data volume corresponding to a type of the respective to-be-encrypted operator; determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator; and encrypting the to-be-encrypted target subsequence of weights based on a mode of encryption of the respective to-be-encrypted operator and the information on the position of the to-be-encrypted target subsequence of weights. Using this disclosure, it is enabled to lower the duration of decryption of the neural network model while still guaranteeing safety of the neural network model.

## Description

### TECHNICAL FIELD

This disclosure relates to field of computer technology, and more particularly, to a method and apparatus for encrypting a model, an electronic device, and a computer-readable storage medium.

### BACKGROUND

A neural network model generally contains a plurality of layers, wherein each layer contains one or a plurality of operators, wherein each operator also contains one or a plurality of weights. In training the neural network model, the neural network model keeps adjusting the weights in the respective operators through an optimization algorithm, to minimize an error between a predicted result output by the neural network model and a real result, thereby obtaining a trained neural network model.

At present, a cost of training the neural network model is extremely high due to a colossal number of the weights in the neural network model. To prevent the trained neural network model from being used by an unauthorized party, an owner of the neural network model generally encrypts all the weights of all the operators in the neural network model.

However, encrypting all the weights of all the operators in the neural network model may lead to a long duration of decryption of the neural network model, thereby impacting use of the neural network model. Therefore, how to lower the duration of decryption of the neural network model while still guaranteeing safety of the neural network model becomes a technical problem pressing for a solution.

### SUMMARY

To solve the above technical problem, this disclosure provides a method and apparatus for encrypting a model, an electronic device, and a computer-readable storage medium, to lower a duration of decryption of a neural network model while still guaranteeing safety of the neural network model.

Embodiments of a first aspect of this disclosure provide a method for encrypting a model, including:
determining at least one to-be-encrypted operator in a neural network model;
determining a to-be-encrypted data volume corresponding to a respective to-be-encrypted operator of the at least one to-be-encrypted operator based on a data volume adjustment coefficient and a total data volume corresponding to a type of the respective to-be-encrypted operator;
determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator; and
encrypting the to-be-encrypted target subsequence of weights based on a mode of encryption of the respective to-be-encrypted operator and the information on the position of the to-be-encrypted target subsequence of weights.

Embodiments of a second aspect of this disclosure provide an apparatus for encrypting a model, including:
an operator determining module, configured for determining at least one to-be-encrypted operator in a neural network model;
a data volume determining module, configured for determining a to-be-encrypted data volume corresponding to a respective to-be-encrypted operator of the at least one to-be-encrypted operator based on a data volume adjustment coefficient and a total data volume corresponding to a type of the respective to-be-encrypted operator;
a weight subsequence determining module, configured for determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator; and
a weight subsequence encrypting module, configured for encrypting the to-be-encrypted target subsequence of weights based on a mode of encryption of the respective to-be-encrypted operator and the information on the position of the to-be-encrypted target subsequence of weights. A third aspect of this disclosure provides a computer-readable storage medium which stores a computer program for implementing the method for encrypting a model for encrypting a model according to the first aspect.

Embodiments of a third aspect of this disclosure provide a computer-readable storage medium, storing a computer program for implementing the method for encrypting a model according to the first aspect.

Embodiments of a fourth aspect of this disclosure provide an electronic device, including: a processor; and a memory configured for storing processor-executable instructions, wherein the processor is configured for reading and executing the processor-executable instructions in the memory to implement the method for encrypting a model according to the first aspect.

Embodiments of a fifth aspect of this disclosure provide a computer program product. When instructions in the computer program product are executed by a processor, the method for encrypting a model according to the first aspect of this disclosure is implemented.

With a method and apparatus for encrypting a model, an electronic device, and a computer-readable storage medium according to embodiments of this disclosure, the electronic device determines at least one to-be-encrypted operator in a neural network model. Then, the electronic device determines a to-be-encrypted data volume corresponding to a respective to-be-encrypted operator of the at least one to-be-encrypted operator based on a data volume adjustment coefficient and a total data volume corresponding to a type of the respective to-be-encrypted operator. After that, the electronic device determines information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator. Finally, the electronic device encrypts the to-be-encrypted target subsequence of weights based on a mode of encryption of the respective to-be-encrypted operator and the information on the position of the to-be-encrypted target subsequence of weights. On one hand, the electronic device determines some operator having great impact on the precision of the neural network model to be the at least one to-be-encrypted operator, reducing the number of to-be-encrypted operators. Meanwhile, the electronic device lowers the to-be-encrypted data volume corresponding to the respective to-be-encrypted operator based on the data volume adjustment coefficient of the respective to-be-encrypted operator, thereby lowering the duration of decryption of the neural network model. On the other hand, the electronic device divides the to-be-encrypted data volume corresponding to the respective to-be-encrypted operator into one or a plurality of target subsequences of weights, wherein the one or the plurality of target subsequences of weights are distributed randomly to different positions in the sequence of weights corresponding to the respective to-be-encrypted operator, thereby raising the degree of difficulty in cracking the neural network model, raising safety of the neural network model.

### BRIEF DESCRIPTION OF DRAWINGS

FIG. 1 is a flowchart of a method for encrypting a model according to an illustrative embodiment of this disclosure.
FIG. 2 is a flowchart of a method for encrypting a model according to another illustrative embodiment of this disclosure.
FIG. 3 is a flowchart of a method for encrypting a model according to another illustrative embodiment of this disclosure.
FIG. 4A is a diagram of a sequence of weights according to an illustrative embodiment of this disclosure.
FIG. 4B is a diagram of a sequence of weights according to another illustrative embodiment of this disclosure.
FIG. 5 is a flowchart of a method for decrypting a model according to an illustrative embodiment of this disclosure.
FIG. 6 is a flowchart of a method for decrypting a model according to another illustrative embodiment of this disclosure.
FIG. 7 is a diagram of a structure of an apparatus for encrypting a model according to an illustrative embodiment of this disclosure.
FIG. 8 is a diagram of a structure of an electronic device according to an illustrative embodiment of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements, numeric expressions, and numerical values of components and steps described in these embodiments.

### Disclosure overview

A neural network model generally contains a plurality of layers, wherein each layer contains one or a plurality of operators, wherein each operator also contains one or a plurality of weights. In training the neural network model, the neural network model keeps adjusting the weights in the respective operators through an optimization algorithm, to minimize an error between a predicted result output by the neural network model and a real result, thereby obtaining a trained neural network model.

At present, a cost of training the neural network model is extremely high due to a colossal number of the weights in the neural network model. To prevent the trained neural network model from being used by an unauthorized party, an owner of the neural network model generally encrypts all the weights of all the operators in the neural network model. However, encrypting all the weights of all the operators in the neural network model may lead to a long duration of decryption of the neural network model, thereby impacting use of the neural network model.

In embodiments of this disclosure, an electronic device determines at least one to-be-encrypted operator in a neural network model. Then, the electronic device determines a to-be-encrypted data volume corresponding to a respective to-be-encrypted operator of the at least one to-be-encrypted operator based on a data volume adjustment coefficient and a total data volume corresponding to the respective to-be-encrypted operator. After that, the electronic device determines information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator. Finally, the electronic device encrypts the to-be-encrypted target subsequence of weights based on a mode of encryption of the respective to-be-encrypted operator and the information on the position of the to-be-encrypted target subsequence of weights. On one hand, the electronic device determines some operator having great impact on the precision of the neural network model to be the at least one to-be-encrypted operator, reducing the number of to-be-encrypted operators. Meanwhile, the electronic device lowers the to-be-encrypted data volume corresponding to the respective to-be-encrypted operator based on the data volume adjustment coefficient of the respective to-be-encrypted operator, thereby lowering the duration of decryption of the neural network model. On the other hand, the electronic device divides the to-be-encrypted data volume corresponding to the respective to-be-encrypted operator into one or a plurality of target subsequences of weights, wherein the one or the plurality of target subsequences of weights are distributed randomly to different positions in the sequence of weights corresponding to the respective to-be-encrypted operator, thereby raising the degree of difficulty in cracking the neural network model, raising safety of the neural network model.

### Illustrative method

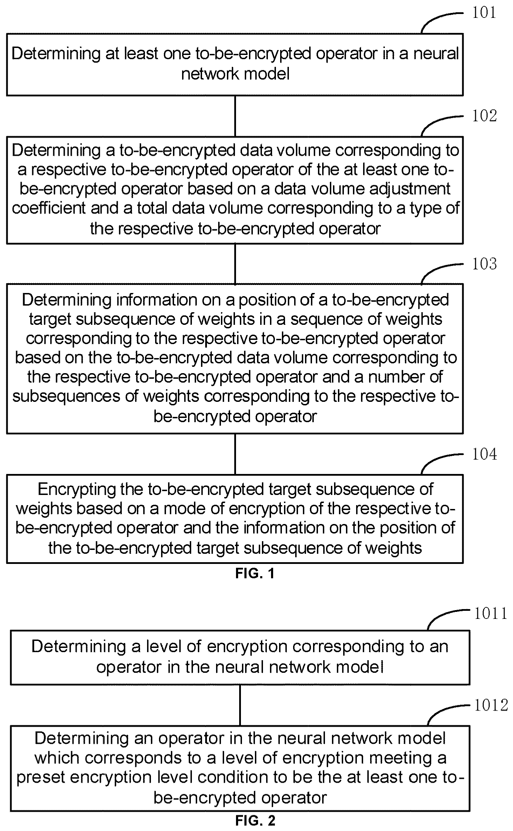

FIG. 1 is a flowchart of a method for encrypting a model according to an illustrative embodiment of this disclosure. This embodiment is applicable to an electronic device, and as shown in FIG. 1, includes steps as follows.

Step 101, Determining at least one to-be-encrypted operator in a neural network model
Illustratively, a neural network model generally contains a plurality of layers, wherein each layer contains one or a plurality of operators. Different operators have different impacts on the precision of the neural network model. For example, in a neural network model, a key (K) operator and a value (V) operator in an attention mechanism, an operator contained in a first linear layer in a feedforward network, a layer normalization operator, and some operator contained in a mixture-of-experts MOE layer have great impact on the precision of the neural network model.

The magnitude of the impact an operator has on the precision of a neural network model may be measured by how much the precision of output data of the neural network model changes due to a change in a weight of the operator. For example, the magnitude of the impact an operator has on the precision of a neural network model may be divided into 4 decreasing impacts, namely, impact 1, impact 2, impact 3, and impact 4, respectively. Impact 1 > impact 2 > impact 3 > impact 4. When a change in a weight of a certain operator leads to a decrease of the precision of the output data of the neural network model by 30% or more, the impact the operator has on the precision of the neural network model is impact 1. When a change in a weight of a certain operator leads to a decrease of the precision of the output data of the neural network model by 15%-30%, the impact the operator has on the precision of the neural network model is impact 2. When a change in a weight of a certain operator leads to a decrease of the precision of the output data of the neural network model by 5%-15%, the impact the operator has on the precision of the neural network model is impact 3. When a change in a weight of a certain operator leads to a decrease of the precision of the output data of the neural network model by 5% or less, the impact the operator has on the precision of the neural network model is impact 4.

The electronic device may reduce a number of to-be-encrypted operators in the neural network model, to lower a duration of decryption of a neural network model, while still guaranteeing safety of the neural network model. Therefore, the electronic device may determine some operator(s) in the neural network model having great impact on the precision of the neural network model to be the at least one to-be-encrypted operator. The electronic device may select an operator in the neural network model which has the greatest impact to be a to-be-encrypted operator. Of course, the electronic device may further select, according to a sequence of decreasing impacts, operators having a plurality of impacts in the neural network model to be operators to be encrypted, which is not limited in embodiments of this disclosure. The processing process that the electronic device determines the at least one to-be-encrypted operator in the neural network model is introduced in detail subsequently, and is not elaborated here.

Step 102, Determining a to-be-encrypted data volume corresponding to a respective to-be-encrypted operator of the at least one to-be-encrypted operator based on a data volume adjustment coefficient and a total data volume corresponding to a type of the respective to-be-encrypted operator

Illustratively, operators of the same type may be used in different layers in the neural network model. Therefore, after the electronic device has determined the at least one to-be-encrypted operator, the electronic device may further determine the total data volume corresponding to the type of the respective to-be-encrypted operator. The total data volume corresponding to the type of the respective to-be-encrypted operator refers to a sum of numbers of bytes corresponding to weights of all to-be-encrypted operators of the type. For example, 5 to-be-encrypted operators 1 are used in the neural network model, wherein a to-be-encrypted operator 1 contains weight 1, weight 2, and weight 3. A number of bytes corresponding to weight 1 is 2 bytes, a number of bytes corresponding to weight 2 is 4 bytes, and a number of bytes corresponding to weight 3 is 8 bytes. Therefore, the total data volume corresponding to to-be-encrypted operator 1 is 5×(2+4+8)=70 bytes.

The electronic device determines some operator(s) in the neural network model having great impact on the precision of the neural network model to be the at least one to-be-encrypted operator, reducing the number of to-be-encrypted operators in the neural network model, thereby lowering the duration of decryption of the neural network model. However, the total data volume corresponding to all the to-be-encrypted operators may still be large, in which case the duration of decryption of the neural network model may still be long. Therefore, to further lower the duration of decryption of the neural network model, the electronic device may further lower a to-be-encrypted data volume corresponding to all the to-be-encrypted operators. The data volume adjustment coefficient corresponding to the respective to-be-encrypted operator may be prestored in the electronic device. The data volume adjustment coefficient corresponding to the respective to-be-encrypted operator is configured for representing a data volume share of the total data volume corresponding to the type of the respective to-be-encrypted operator that the to-be-encrypted data volume corresponding to the respective to-be-encrypted operator accounts for. Data volume adjustment coefficients corresponding to different to-be-encrypted operators may be identical or different, which is not limited in embodiments of this disclosure. Embodiments of this disclosure are introduced taking that data volume adjustment coefficients corresponding to different to-be-encrypted operators differ as an example, and other cases are similar to the example, and are not elaborated in embodiments of this disclosure.

The greater the impact a to-be-encrypted operator has on the precision of the neural network model is, the greater a data volume adjustment coefficient corresponding to the to-be-encrypted operator. The less the impact a to-be-encrypted operator has on the precision of the neural network model is, the less a data volume adjustment coefficient corresponding to the to-be-encrypted operator. The data volume adjustment coefficient of a to-be-encrypted operator ranges in (0, 1]. In this way, having determined the total data volume and the data volume adjustment coefficient corresponding to the respective to-be-encrypted operator, the electronic device may further determine the to-be-encrypted data volume corresponding to the respective to-be-encrypted operator based on the data volume adjustment coefficient and the total data volume corresponding to the respective to-be-encrypted operator, thereby lowering the to-be-encrypted data volume corresponding to the respective to-be-encrypted operator. The determining, by the electronic device, the to-be-encrypted data volume corresponding to the respective to-be-encrypted operator based on the data volume adjustment coefficient and the total data volume corresponding to the respective to-be-encrypted operator is introduced in detail subsequently, and is not elaborated here.

Step 103, Determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator

Illustratively, all weights of the respective to-be-encrypted operator are arranged in order and stored, forming the sequence of weights corresponding to the respective to-be-encrypted operator. A sequence length of the sequence of weights corresponding to the respective to-be-encrypted operator is the total data volume corresponding to the respective to-be-encrypted operator. For example, the total data volume corresponding to to-be-encrypted operator 1 is 70 bytes. Then, the sequence length of the sequence of weights corresponding to to-be-encrypted operator 1 is also 70 bytes. As the data volume adjustment coefficient of a to-be-encrypted operator ranges in (0, 1], the to-be-encrypted data volume corresponding to the respective to-be-encrypted operator is less than or equal to the total data volume corresponding to the respective to-be-encrypted operator, i.e., the sequence length of a sequence of to-be-encrypted weights of the respective to-be-encrypted operator is less than or equal to the sequence length of the sequence of weights corresponding to the respective to-be-encrypted operator. The sequence length of the sequence of to-be-encrypted weights of the respective to-be-encrypted operator equals the to-be-encrypted data volume corresponding to the respective to-be-encrypted operator. For example, the to-be-encrypted data volume corresponding to to-be-encrypted operator 1 is 56 bytes. Then, the sequence length of the sequence of to-be-encrypted weights of to-be-encrypted operator 1 is also 56 bytes.

If the to-be-encrypted data volume corresponding to the respective to-be-encrypted operator equals the total data volume corresponding to the respective to-be-encrypted operator, it means that the entire sequence of weights corresponding to the respective to-be-encrypted operator is to be encrypted. Accordingly, the electronic device may encrypt the entire sequence of weights corresponding to the respective to-be-encrypted operator based on the mode of encryption of the respective to-be-encrypted operator. If the to-be-encrypted data volume corresponding to the respective to-be-encrypted operator is less than the total data volume corresponding to the respective to-be-encrypted operator, it means that part of the sequence of weights corresponding to the respective to-be-encrypted operator is to be encrypted.

The electronic device may encrypt the part of the sequence of weights corresponding to the respective to-be-encrypted operator in various modes. Two feasible modes of encryption are provided in embodiments of this disclosure, and are specifically as follows.

In the first mode of encryption, starting from a starting position of the sequence of weights corresponding to the respective to-be-encrypted operator, the electronic device encrypts the part of the sequence of weights to be encrypted as a whole. Accordingly, based on the to-be-encrypted data volume corresponding to the respective to-be-encrypted operator, the electronic device may determine a sequence length of the part of the sequence of weights to be encrypted, starting from the starting position of the sequence of weights corresponding to the respective to-be-encrypted operator, and encrypt the part of the sequence of weights to be encrypted based on the mode of encryption of the respective to-be-encrypted operator.

In the second mode of encryption, to raise the degree of difficulty in cracking the neural network model and raise safety of the neural network model, in case part of the sequence of weights corresponding to the respective to-be-encrypted operator is to be encrypted, the electronic device may divide the part of the sequence of weights to be encrypted into one or a plurality of subsequences of weights, and distribute the one or the plurality of subsequences of weights randomly to different positions in the sequence of weights corresponding to the respective to-be-encrypted operator. Therefore, the number of subsequences of weights corresponding to the respective to-be-encrypted operator may be prestored in the electronic device. The number of subsequences of weights is configured for representing a number of subsequences of weights the part of the sequence of weights to be encrypted is divided into. The number of subsequences of weights is an integer greater than or equal to 1, and the number of subsequences of weights may be generated through a randomized algorithm. Numbers of subsequences of weights corresponding to different to-be-encrypted operators may be identical or different, which is not limited in embodiments of this disclosure. The information on the position of the target subsequence of weights to be encrypted includes a starting position and the sequence length of the to-be-encrypted target subsequence of weights. The electronic device may determine the sequence length of at least one target subsequence of weights based on the to-be-encrypted data volume corresponding to the respective to-be-encrypted operator (i.e., the sequence length of the part of the sequence of weights to be encrypted) and the number of subsequences of weights corresponding to the respective to-be-encrypted operator. Then, the electronic device may determine the starting position of the at least one target subsequence of weights in the sequence of weights corresponding to the respective to-be-encrypted operator based on a preset starting position determining rule and the sequence length of the at least one target subsequence of weights, thereby obtaining the information on the position of the at least one target subsequence of weights. The information on the position of the to-be-encrypted target subsequence of weights as determined by the electronic device is to meet two conditions as follows. The first condition is that the at least one target subsequence of weights is each within the range of the sequence of weights corresponding to the respective to-be-encrypted operator. The second condition is that any two of a plurality of target subsequences of weights do not overlap. The processing process that the electronic device determines the information on the position of the to-be-encrypted target subsequence of weights in the sequence of weights corresponding to the respective to-be-encrypted operator based on the to-be-encrypted data volume corresponding to the respective to-be-encrypted operator and the number of subsequences of weights corresponding to the respective to-be-encrypted operator is introduced in detail subsequently, and is not elaborated here.

Step 104, Encrypting the to-be-encrypted target subsequence of weights based on a mode of encryption of the respective to-be-encrypted operator and the information on the position of the to-be-encrypted target subsequence of weights

Illustratively, the mode of encryption of the respective to-be-encrypted operator may be prestored in the electronic device. Modes of encryption of different to-be-encrypted operators may be identical or different, which is not limited in embodiments of this disclosure. the mode of encryption may be selected to be a mode of symmetric key encryption, or a mode of asymmetric key encryption, or a mode of encryption of another type, which is also not limited in embodiments of this disclosure. Having determined the information on the position of the at least one target subsequence of weights corresponding to the respective to-be-encrypted operator, the electronic device may encrypt the at least one target subsequence of weights corresponding to the respective to-be-encrypted operator based on the mode of encryption of the respective to-be-encrypted operator, thereby obtaining an encrypted neural network model.

In embodiments of this disclosure, an electronic device determines at least one to-be-encrypted operator in a neural network model. Then, the electronic device determines a to-be-encrypted data volume corresponding to a respective to-be-encrypted operator of the at least one to-be-encrypted operator based on a data volume adjustment coefficient and a total data volume corresponding to the respective to-be-encrypted operator. After that, the electronic device determines information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator. Finally, the electronic device encrypts the to-be-encrypted target subsequence of weights based on a mode of encryption of the respective to-be-encrypted operator and the information on the position of the to-be-encrypted target subsequence of weights. On one hand, the electronic device determines some operator having great impact on the precision of the neural network model to be the at least one to-be-encrypted operator, reducing the number of to-be-encrypted operators. Meanwhile, the electronic device lowers the to-be-encrypted data volume corresponding to the respective to-be-encrypted operator based on the data volume adjustment coefficient of the respective to-be-encrypted operator, thereby lowering the duration of decryption of the neural network model. On the other hand, the electronic device divides the to-be-encrypted data volume corresponding to the respective to-be-encrypted operator into one or a plurality of target subsequences of weights, wherein the one or the plurality of target subsequences of weights are distributed randomly to different positions in the sequence of weights corresponding to the respective to-be-encrypted operator, thereby raising the degree of difficulty in cracking the neural network model, raising safety of the neural network model.

As shown in FIG. 2, based on the embodiment shown in FIG. 1, step 101 may include steps as follows.

Step 1011, Determining a level of encryption corresponding to an operator in the neural network model
Illustratively, a level of encryption corresponding to a respective operator in the neural network model may be prestored in the electronic device. The level of encryption of the respective operator is positively correlated with the impact the respective operator has on the precision of the neural network model. That is, the greater the impact an operator has on the precision of the neural network model, the higher a level of encryption corresponding to the operator, and the less the impact an operator has on the precision of the neural network model, the lower a level of encryption corresponding to the operator. One operator corresponds to one level of encryption, whereas one level of encryption may correspond to one or a plurality of operators. For example, the magnitude of the impact an operator has on the precision of a neural network model may be divided into 4 decreasing impacts, namely, impact 1, impact 2, impact 3, and impact 4, respectively. Impact 1 > impact 2 > impact 3 > impact 4. Levels of encryption are divided into level of encryption 1, level of encryption 2, and level of encryption 3 in decreasing order. Level of encryption 1 > level of encryption 2 > level of encryption 3. Further, impact 1 corresponds to level of encryption 1, i.e., a level of encryption corresponding to an operator with impact 1 is level of encryption 1; impact 2 corresponds to level of encryption 2, i.e. a level of encryption corresponding to an operator with impact 2 is level of encryption 2; and impact 3 and impact 4 correspond to level of encryption 3, i.e. levels of encryption corresponding to operators with impact 3 and impact 4 are level of encryption 3. As one impact corresponds to one or a plurality of operators, one level of encryption corresponds to one or a plurality of operators.

Step 1012, Determining an operator in the neural network model which corresponds to a level of encryption meeting a preset encryption level condition to be the at least one to-be-encrypted operator
Illustratively, an encryption level condition may be prestored in the electronic device. The encryption level condition is configured for indicating a level of encryption corresponding to the at least one to-be-encrypted operator in the neural network model. The encryption level condition may contain one or a plurality of levels of encryption in decreasing order. A number of levels of encryption contained in the encryption level condition may be set based on an allowed duration of decryption and performance of decryption corresponding to a runtime environment the neural network model is in. The better the performance of decryption in the runtime environment is, and the longer the allowed duration of decryption is, the greater the number of levels of encryption contained in the encryption level condition. For example, the encryption level condition contains level of encryption 1 and level of encryption 2. The poorer the performance of decryption in the runtime environment is, and the shorter the allowed duration of decryption is, the less the number of levels of encryption contained in the encryption level condition. For example, the encryption level condition contains merely level of encryption 1.

Having determined the level of encryption corresponding to the respective operator, the electronic device may further determine the operator in the neural network model which corresponds to the level of encryption meeting the preset encryption level condition to be the at least one to-be-encrypted operator. For example, the encryption level condition contains level of encryption 1 and level of encryption 2, wherein level of encryption 1 corresponds to operator 1 to operator 10, and level of encryption 2 corresponds to operator 11 to operator 20. Then, the electronic device may determine operator 1 to operator 20 to be the at least one to-be-encrypted operator.

In embodiments of this disclosure, the electronic device determines the level of encryption corresponding to the respective operator based on the impact the respective operator has on the precision of the neural network model. Then, based on the allowed duration of decryption and the performance of decryption corresponding to the runtime environment the neural network model is in, the electronic device determines, in decreasing order of levels of encryption, at least one operator corresponding to one or a plurality of levels of encryption to be the at least one to-be-encrypted operator. In this way, the electronic device prioritizes determining an operator corresponding to a high level of encryption to be the at least one to-be-encrypted operator, thereby raising safety of the neural network model. Further, the electronic device may determine at least one operator corresponding to one or a plurality of levels of encryption to be the at least one to-be-encrypted operator based on the runtime environment the neural network model is in, thereby further improving adaptability of the neural network model to different runtime environments.

Based on the embodiment shown in FIG. 1, the data volume adjustment coefficient includes at least one of a data volume compression coefficient and a coefficient of importance of the respective to-be-encrypted operator, and step 102 may include a step of
determining a product of the total data volume corresponding to the type of the respective to-be-encrypted operator and the data volume compression coefficient and / or the coefficient of importance of the respective to-be-encrypted operator to be the to-be-encrypted data volume corresponding to the respective to-be-encrypted operator.

Illustratively, the data volume adjustment coefficient corresponding to the respective to-be-encrypted operator may include at least one of a data volume compression coefficient and a coefficient of importance of the respective to-be-encrypted operator. The data volume compression coefficient may be set based on the allowed duration of decryption and the performance of decryption corresponding to the runtime environment the neural network model is in. Of course, the data volume compression coefficient may further be set based on other decryption capability of the runtime environment, which is not limited in embodiments of this disclosure. Embodiments of this disclosure are introduced taking that the data volume compression coefficient is set based on the allowed duration of decryption and the performance of decryption corresponding to the runtime environment as an example, and other cases are similar to the example, and are not elaborated here. The better the performance of decryption in the runtime environment is, and the longer the allowed duration of decryption is, the greater the data volume compression coefficient. The poorer the performance of decryption in the runtime environment is, and the shorter the allowed duration of decryption is, the less the data volume compression coefficient. The data volume compression coefficient ranges in (0, 1]. Different to-be-encrypted operators have different impacts on the precision of the neural network model. Therefore, the coefficient of importance of the respective to-be-encrypted operator may be set based on the impact the respective to-be-encrypted operator has on the precision of the neural network model. The greater the impact a to-be-encrypted operator has on the precision of the neural network model, the greater the coefficient of importance of the respective to-be-encrypted operator. The less the impact a to-be-encrypted operator has on the precision of the neural network model, the less the coefficient of importance of the respective to-be-encrypted operator. The coefficient of importance ranges in (0, 1]. The data volume compression coefficient and the coefficient of importance are both configured for representing a data volume share of the total data volume corresponding to the respective to-be-encrypted operator that the to-be-encrypted data volume corresponding to the respective to-be-encrypted operator accounts for.

Based on different scenes, the electronic device may adjust the to-be-encrypted data volume corresponding to the respective to-be-encrypted operator in different data adjustment modes. In a first scene, the electronic device adjusts the to-be-encrypted data volume corresponding to the respective to-be-encrypted operator based merely on the allowed duration of decryption and the performance of decryption corresponding to the runtime environment. Therefore, the electronic device may determine the product of the total data volume corresponding to the type of the respective to-be-encrypted operator and the data volume compression coefficient to be the to-be-encrypted data volume corresponding to the respective to-be-encrypted operator. For example, the total data volume corresponding to to-be-encrypted operator 1 is 70 bytes, and the data volume compression coefficient is 0.8. Then, the to-be-encrypted data volume corresponding to to-be-encrypted operator 1 is 70 × 0.8=56 bytes. In a second scene, the electronic device adjusts the to-be-encrypted data volume corresponding to the respective to-be-encrypted operator based merely on the impact the respective to-be-encrypted operator has on the precision of the neural network model. Therefore, the electronic device also may determine the product of the total data volume corresponding to the type of the respective to-be-encrypted operator and the coefficient of importance to be the to-be-encrypted data volume corresponding to the respective to-be-encrypted operator. For example, the total data volume corresponding to to-be-encrypted operator 1 is 70 bytes, and the coefficient of importance is 0.5. Then, the to-be-encrypted data volume corresponding to to-be-encrypted operator 1 is 70 × 0.5=35 bytes. In a third scene, the electronic device adjusts the to-be-encrypted data volume corresponding to the respective to-be-encrypted operator based on the allowed duration of decryption and the performance of decryption corresponding to the runtime environment, and the impact the respective to-be-encrypted operator has on the precision of the neural network model. Therefore, the electronic device may determine the product of the total data volume corresponding to the type of the respective to-be-encrypted operator, the data volume compression coefficient, and the coefficient of importance to be the to-be-encrypted data volume corresponding to the respective to-be-encrypted operator. For example, the total data volume corresponding to to-be-encrypted operator 1 is 70 bytes, the data volume compression coefficient is 0.8, and the coefficient of importance is 0.5. Then, the to-be-encrypted data volume corresponding to to-be-encrypted operator 1 is 70 × 0.8 × 0.5=28 bytes.

In embodiments of this disclosure, the electronic device determines a product of the total data volume corresponding to the type of the respective to-be-encrypted operator and the data volume compression coefficient and / or the coefficient of importance of the respective to-be-encrypted operator to be the to-be-encrypted data volume corresponding to the respective to-be-encrypted operator. In this way, based on different scenes, the electronic device may adjust the to-be-encrypted data volume corresponding to the respective to-be-encrypted operator in different data adjustment modes, thereby lowering the to-be-encrypted data volume corresponding to the respective to-be-encrypted operator, and then lowering the duration of decryption of the neural network model.

Based on the embodiment shown in FIG. 1, the electronic device further executes steps as follows.

First step, Obtaining a target allowed duration of decryption and target decryption performance information corresponding to a runtime environment the neural network model is in
Illustratively, the data volume compression coefficient is set based on the allowed duration of decryption and the performance of decryption corresponding to the runtime environment the neural network model is in. Therefore, the electronic device may obtain a target allowed duration of decryption and target decryption performance information corresponding to a runtime environment the neural network model is in. The target decryption performance information corresponding to the runtime environment may contain a volume of data decrypted per unit time by a decryptor in the runtime environment, a resource utilization rate of the decryptor, etc.

Second step, Querying a prestored correspondence between decryption performance information, an allowed duration of decryption, and the data volume compression coefficient about the data volume compression coefficient corresponding to both the target decryption performance information and the target allowed duration of decryption
Illustratively, a correspondence between decryption performance information, an allowed duration of decryption, and a data volume compression coefficient may be prestored in the electronic device. The correspondence may be set by a person skilled in the art based on an experimental test. Having obtained the target allowed duration of decryption and the target decryption performance information corresponding to the runtime environment, the electronic device may further query a prestored correspondence between decryption performance information, an allowed duration of decryption, and the data volume compression coefficient about the data volume compression coefficient corresponding to both the target decryption performance information and the target allowed duration of decryption.

In embodiments of this disclosure, the electronic device obtains a target allowed duration of decryption and target decryption performance information corresponding to a runtime environment the neural network model is in. Then, the electronic device queries a prestored correspondence between decryption performance information, an allowed duration of decryption, and the data volume compression coefficient about the data volume compression coefficient corresponding to both the target decryption performance information and the target allowed duration of decryption. In this way, the electronic device is enabled to dynamically adjust the data volume compression coefficient based on the target allowed duration of decryption and the target decryption performance information corresponding to the runtime environment, thereby to adjust the to-be-encrypted data volume corresponding to the respective to-be-encrypted operator based on the data volume compression coefficient, and then to guarantee enabling the duration of decryption of the neural network model to meet a need of the runtime environment.

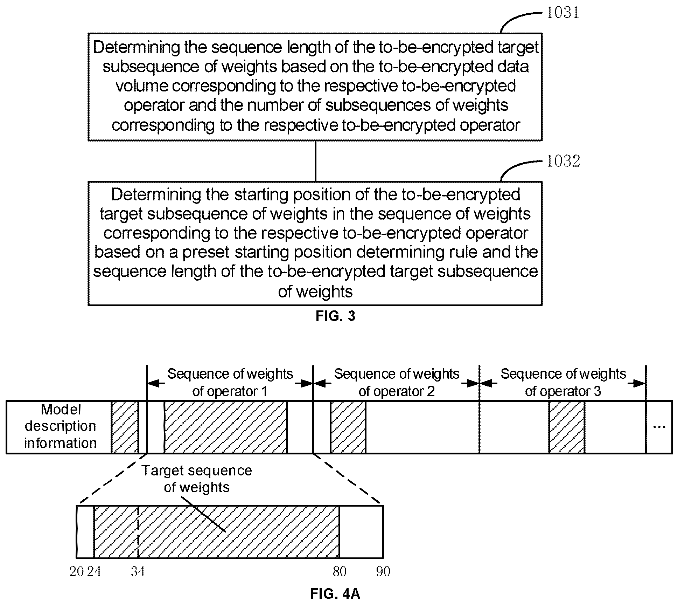

As shown in FIG. 3, based on the embodiment shown in FIG. 1, the information on the position of the to-be-encrypted target subsequence of weights includes a starting position and a sequence length of the to-be-encrypted target subsequence of weights, and step 103 may include steps as follows.

Step 1031, Determining the sequence length of the to-be-encrypted target subsequence of weights based on the to-be-encrypted data volume corresponding to the respective to-be-encrypted operator and the number of subsequences of weights corresponding to the respective to-be-encrypted operator
Illustratively, the information on the position of the to-be-encrypted target subsequence of weights includes a starting position and a sequence length of the to-be-encrypted target subsequence of weights. The starting position is an offset of a first element in the to-be-encrypted target subsequence of weights relative to a first element of the sequence of weights. The sequence length is a data volume corresponding to the to-be-encrypted target subsequence of weights. In case part of the sequence of weights corresponding to the respective to-be-encrypted operator is to be encrypted, the electronic device may divide the part of the sequence of weights to be encrypted into one or a plurality of subsequences of weights. If the number of subsequences of weights corresponding to the respective to-be-encrypted operator is 1, it means that the electronic device divides the part of the sequence of weights to be encrypted into one subsequence of weights. Accordingly, the electronic device may determine the to-be-encrypted data volume corresponding to the respective to-be-encrypted operator to be the sequence length of the to-be-encrypted target subsequence of weights corresponding to the respective to-be-encrypted operator. For example, the to-be-encrypted data volume corresponding to to-be-encrypted operator 1 is 56 bytes. Then, the sequence length of the to-be-encrypted target subsequence of weights corresponding to to-be-encrypted operator 1 is 56 bytes. If the number of subsequences of weights corresponding to the respective to-be-encrypted operator is greater than 1, it means that the electronic device divides the part of the sequence of weights to be encrypted into a plurality of subsequences of weights. Accordingly, the electronic device may divide, according to the number of subsequences of weights, the to-be-encrypted data volume corresponding to the respective to-be-encrypted operator equally or unequally into a plurality of to-be-encrypted subdata volumes. The number of the to-be-encrypted subdata volumes equal to the number of subsequences of weights. Then, the electronic device may determine one to-be-encrypted subdata volume to be the sequence length of one to-be-encrypted target subsequence of weights. For example, the to-be-encrypted data volume corresponding to to-be-encrypted operator 1 is 56 bytes, and the number of subsequences of weights is 7. If an equal division mode is used, the sequence length of each to-be-encrypted target subsequence of weights is 8 bytes. If an unequal division mode is used, sequence lengths of 7 to-be-encrypted target subsequences of weights are {5 bytes, 6 bytes, 7 bytes, 8 bytes, 9 bytes, 10 bytes, 11 bytes}, or {5 bytes, 5 bytes, 5 bytes, 5 bytes, 6 bytes, 10 bytes, 20 bytes}, etc., without exhaustive enumeration of possible numbers in embodiments of this disclosure. The processing process that the electronic device divides the to-be-encrypted data volume corresponding to the respective to-be-encrypted operator unequally into a plurality of to-be-encrypted subdata volumes may be implemented using a randomized algorithm or another algorithm, which is not limited in embodiments of this disclosure.

Step 1032, Determining the starting position of the to-be-encrypted target subsequence of weights in the sequence of weights corresponding to the respective to-be-encrypted operator based on a preset starting position determining rule and the sequence length of the to-be-encrypted target subsequence of weights
Illustratively, the information on the position of the to-be-encrypted target subsequence of weights as determined by the electronic device is to meet two conditions as follows. The first condition is that the at least one target subsequence of weights is each within the range of the sequence of weights corresponding to the respective to-be-encrypted operator. The second condition is that any two of a plurality of target subsequences of weights do not overlap. To enable the to-be-encrypted target subsequence of weights to meet the two conditions, it is crucial to determine the starting position of the to-be-encrypted target subsequence of weights. Having determined the sequence length of the to-be-encrypted target subsequence of weights, the electronic device may further determine the starting position of the to-be-encrypted target subsequence of weights in the sequence of weights corresponding to the respective to-be-encrypted operator based on a preset starting position determining rule and the sequence length of the to-be-encrypted target subsequence of weights.

Specifically, as shown in FIG. 4A, in case the number of to-be-encrypted target subsequences of weights is one, in the first step, the electronic device may determine the starting position of the sequence of weights corresponding to the respective to-be-encrypted operator to be a minimum of a range of the starting position of the to-be-encrypted target subsequence of weights. In the second step, the electronic device may determine a difference between the ending position of the sequence of weights corresponding to the respective to-be-encrypted operator and the sequence length of the to-be-encrypted target subsequence of weights to be a maximum of the range of the starting position of the to-be-encrypted target subsequence of weights. In the third step, the electronic device may select a random value in the range of the starting position of the to-be-encrypted target subsequence of weights to be the starting position of the to-be-encrypted target subsequence of weights. For example, of the sequence of weights corresponding to to-be-encrypted operator 1, the starting position is 20 bytes, the sequence length is 70 bytes, and the ending position is 90 bytes. The sequence length of the to-be-encrypted target subsequence of weights corresponding to to-be-encrypted operator 1 is 56 bytes. Further, of the range of the starting position of the to-be-encrypted target subsequence of weights, the minimum is 20 bytes, and the maximum is 90-56=34 bytes. The electronic device determines a random value of 24 bytes in the range [20, 34] of the starting position of the to-be-encrypted target subsequence of weights to be the starting position of the to-be-encrypted target subsequence of weights. Then, of the to-be-encrypted target subsequence of weights, the starting position is 24 bytes, and the ending position is 80 bytes.

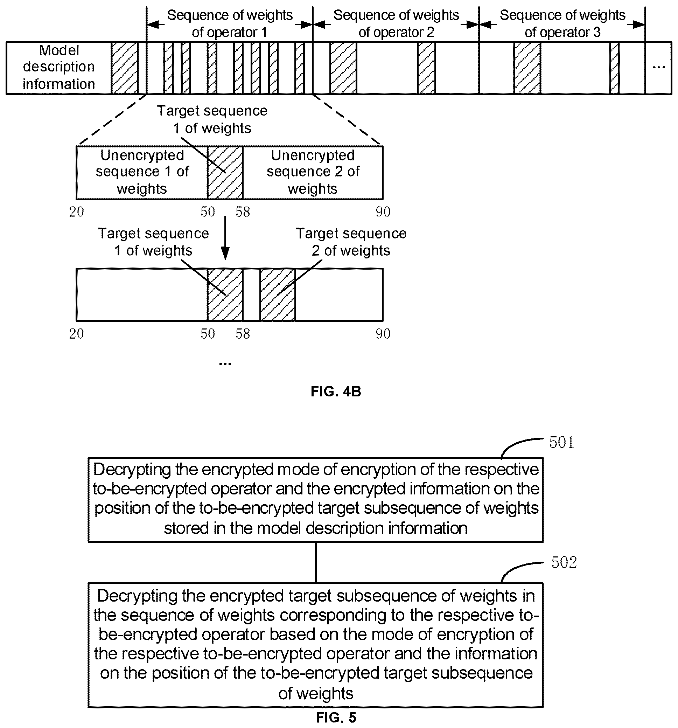

As shown in FIG. 4B, in case the number of to-be-encrypted target subsequences of weights is more than one, in the first step, the electronic device determines a starting position of a first target subsequence of weights in the sequence of weights corresponding to the respective to-be-encrypted operator. The process of determining the starting position of the first target subsequence of weights is similar to the above process of determining the starting position of one target subsequence of weights, which is not repeated here. For example, of the sequence of weights corresponding to to-be-encrypted operator 1, the starting position is 20 bytes, the sequence length is 70 bytes, and the ending position is 90 bytes. The to-be-encrypted data volume corresponding to to-be-encrypted operator 1 is 56 bytes, sequence lengths of 7 to-be-encrypted target subsequences of weights corresponding to to-be-encrypted operator 1 are each 8 bytes. Of a range of a starting position of a target subsequence 1 of weights, a minimum is 20 bytes, and a maximum is 90-8=82 bytes. The electronic device determines a random value of 50 bytes in the range [20, 82] of the starting position to be the starting position of the to-be-encrypted target subsequence of weights. Then, of the to-be-encrypted target subsequence of weights, the starting position is 50 bytes, and the ending position is 58 bytes. In the second step, after the electronic device has determined the starting position of the first target subsequence of weights, the sequence of weights corresponding to the respective to-be-encrypted operator is divided by the first target subsequence of weights into two unencrypted sequences of weights. In this case, the electronic device determines starting positions and ending positions of the two unencrypted sequences of weights, respectively. For example, the sequence of weights corresponding to to-be-encrypted operator 1 is divided by the to-be-encrypted target subsequence 1 of weights into 2 unencrypted sequences of weights, which are unencrypted sequence 1 of weights and unencrypted sequence 2 of weights, respectively. Of the unencrypted sequence 1 of weights, the starting position is 20 bytes, and the ending position is 50 bytes; and of the unencrypted sequence 2 of weights, the starting position is 58 bytes, and the ending position is 90 bytes. In the third step, the electronic device selects, in the two unencrypted sequences of weights, an unencrypted sequence of weights having a sequence length greater than that of a second to-be-encrypted target subsequence of weights. For example, the electronic device selects the unencrypted sequence 2 of weights. Of the unencrypted sequence 2 of weights, the starting position is 58 bytes, and the ending position is 90 bytes. In the fourth step, the electronic device determines the starting position of the second to-be-encrypted target subsequence of weights in the selected unencrypted sequence of weights. The process of determining the starting position of the second to-be-encrypted target subsequence of weights is similar to the above process of determining the starting position of the first target subsequence of weights, which is not repeated here. For example, of the unencrypted sequence 2 of weights, the starting position is 58 bytes, and the ending position is 90 bytes. Of a range of a starting position of a target subsequence 2 of weights, a minimum is 58 bytes, and a maximum is 90-8=82 bytes. The electronic device determines a random value of 62 bytes in the range [58, 82] of the starting position to be the starting position of the to-be-encrypted target subsequence 2 of weights. Then, of the to-be-encrypted target subsequence 2 of weights, the starting position is 62 bytes, and the ending position is 70 bytes. In the fifth step, the electronic device determines the starting position of any other to-be-encrypted target subsequence of weights in sequence according to the above process of determining the starting position of the second to-be-encrypted target subsequence of weights, which is not repeated in embodiments of this disclosure.

Note that in case the number of to-be-encrypted target subsequences of weights is more than one, the order of determining starting positions of the target subsequences of weights may not be the same as the order of the target subsequences of weights in the sequence of weights.

In embodiments of this disclosure, the electronic device determines the sequence length of the to-be-encrypted target subsequence of weights based on the to-be-encrypted data volume corresponding to the respective to-be-encrypted operator and the number of subsequences of weights corresponding to the respective to-be-encrypted operator. Then, the electronic device determines the starting position of the to-be-encrypted target subsequence of weights in the sequence of weights corresponding to the respective to-be-encrypted operator based on a preset starting position determining rule and the sequence length of the to-be-encrypted target subsequence of weights. In this way, the electronic device divides the to-be-encrypted data volume corresponding to the respective to-be-encrypted operator into one or a plurality of target subsequences of weights, wherein the one or the plurality of target subsequences of weights are distributed randomly to different positions in the sequence of weights corresponding to the respective to-be-encrypted operator, thereby raising the degree of difficulty in cracking the neural network model, raising safety of the neural network model.

Based on the embodiment shown in FIG. 1, the electronic device further executes a step of
encrypting the mode of encryption of the respective to-be-encrypted operator and the information on the position of the to-be-encrypted target subsequence of weights, and storing the encrypted mode of encryption of the respective to-be-encrypted operator and the encrypted information on the position of the to-be-encrypted target subsequence of weights in model description information which describes the neural network model.

Illustratively, to guarantee normal decryption of the encrypted neural network model, first, the runtime environment the neural network model is in is to determine which operator in the neural network model is encrypted, that is, the runtime environment is to determine the numbering of the at least one to-be-encrypted operator. Then, the runtime environment is further to determine the mode of encryption of the respective to-be-encrypted operator. After that, the runtime environment is further to determine which position in the sequence of weights corresponding to the respective to-be-encrypted operator where encryption is performed, that is, the runtime environment is further to determine the information on the position of the to-be-encrypted target subsequence of weights corresponding to the respective to-be-encrypted operator. Based on this, the electronic device may encrypt the mode of encryption of the respective to-be-encrypted operator together with the information on the position of the to-be-encrypted target subsequence of weights corresponding to the respective to-be-encrypted operator, to obtain encryption information. Then, as shown in FIG. 4A and FIG. 4B, the electronic device may store the numbering of the at least one to-be-encrypted operator and the encryption information in the model description information.

In embodiments of this disclosure, the electronic device encrypts the mode of encryption of the respective to-be-encrypted operator and the information on the position of the to-be-encrypted target subsequence of weights, and stores the encrypted mode of encryption of the respective to-be-encrypted operator and the encrypted information on the position of the to-be-encrypted target subsequence of weights in model description information which describes the neural network model, thereby guaranteeing normal decryption of the encrypted neural network model.

As shown in FIG. 5, based on the embodiment shown in FIG. 1, the electronic device further executes steps as follows.

Step 501, Decrypting the encrypted mode of encryption of the respective to-be-encrypted operator and the encrypted information on the position of the to-be-encrypted target subsequence of weights stored in the model description information
Illustratively, the electronic device in this illustrative embodiment is an electronic device corresponding to the runtime environment the neural network model is in. Based on this, the electronic device encrypts the mode of encryption of the respective to-be-encrypted operator together with the information on the position of the to-be-encrypted target subsequence of weights corresponding to the respective to-be-encrypted operator, to obtain encryption information, and stores the numbering of the at least one to-be-encrypted operator and the encryption information in the model description information. After the electronic device has obtained the encrypted neural network model, first, the electronic device may determine the numbering of the at least one to-be-encrypted operator from the model description information. Then, the electronic device may decrypt the encrypted mode of encryption of the respective to-be-encrypted operator and the encrypted information on the position of the to-be-encrypted target subsequence of weights stored in the model description information, thereby obtaining the mode of encryption of the respective to-be-encrypted operator and the information on the position of the to-be-encrypted target subsequence of weights.

Step 502, Decrypting the encrypted target subsequence of weights in the sequence of weights corresponding to the respective to-be-encrypted operator based on the mode of encryption of the respective to-be-encrypted operator and the information on the position of the to-be-encrypted target subsequence of weights
Illustratively, after the electronic device has obtained the mode of encryption of the respective to-be-encrypted operator and the information on the position of the to-be-encrypted target subsequence of weights, the electronic device may further decrypt the encrypted target subsequence of weights in the sequence of weights corresponding to the respective to-be-encrypted operator based on the mode of encryption of the respective to-be-encrypted operator and the information on the position of the to-be-encrypted target subsequence of weights, thereby obtaining the unencrypted neural network model.

In embodiments of this disclosure, the electronic device decrypts the encrypted mode of encryption of the respective to-be-encrypted operator and the encrypted information on the position of the to-be-encrypted target subsequence of weights stored in the model description information. Then, the electronic device decrypts the encrypted target subsequence of weights in the sequence of weights corresponding to the respective to-be-encrypted operator based on the mode of encryption of the respective to-be-encrypted operator and the information on the position of the to-be-encrypted target subsequence of weights, thereby decrypting the encrypted neural network model.

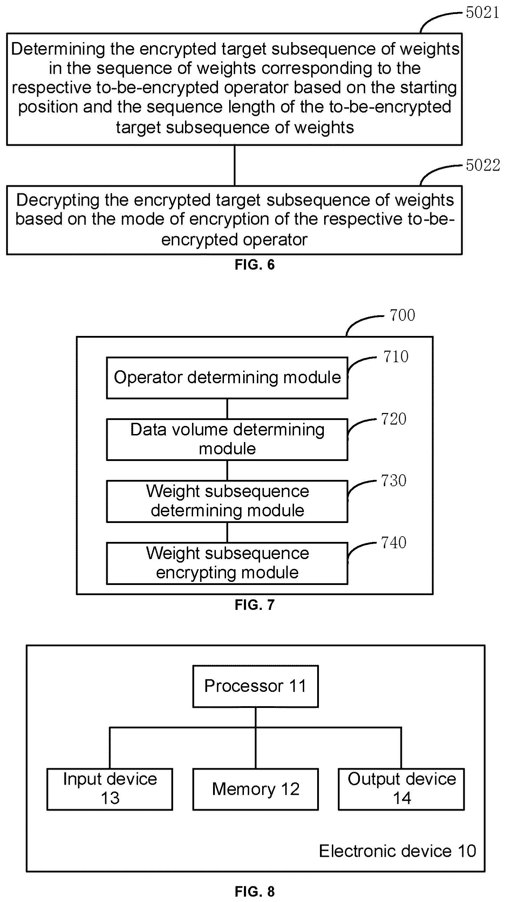

As shown in FIG. 6, based on the embodiment shown in FIG. 5, the information on the position of the to-be-encrypted target subsequence of weights includes a starting position and a sequence length of the to-be-encrypted target subsequence of weights, and step 502 includes steps as follows.

Step 5021, Determining the encrypted target subsequence of weights in the sequence of weights corresponding to the respective to-be-encrypted operator based on the starting position and the sequence length of the to-be-encrypted target subsequence of weights

Illustratively, combining FIG. 4A and FIG. 4B, having obtained the information on the position of the to-be-encrypted target subsequence of weights corresponding to the respective to-be-encrypted operator, the electronic device may further determine the encrypted target subsequence of weights in the sequence of weights corresponding to the respective to-be-encrypted operator based on the starting position and the sequence length of the to-be-encrypted target subsequence of weights.

Step 5022, Decrypting the encrypted target subsequence of weights based on the mode of encryption of the respective to-be-encrypted operator

Illustratively, having determined the encrypted target subsequence of weights in the sequence of weights corresponding to the respective to-be-encrypted operator, the electronic device may decrypt the encrypted target subsequence of weights based on the mode of encryption of the respective to-be-encrypted operator, thereby obtaining the unencrypted neural network model.

In embodiments of this disclosure, the electronic device determines the encrypted target subsequence of weights in the sequence of weights corresponding to the respective to-be-encrypted operator based on the starting position and the sequence length of the to-be-encrypted target subsequence of weights. Then, the electronic device decrypts the encrypted target subsequence of weights based on the mode of encryption of the respective to-be-encrypted operator, thereby decrypting the encrypted neural network model.

### Illustrative apparatus

FIG. 7 is a diagram of a structure of an apparatus for encrypting a model according to an illustrative embodiment of this disclosure. The apparatus 700 for encrypting a model includes an operator determining module 710, a data volume determining module 720, a weight subsequence determining module 730, and a weight subsequence encrypting module 740.

The operator determining module 710 is determining at least one to-be-encrypted operator in a neural network model.

The data volume determining module 720 is configured for determining a to-be-encrypted data volume corresponding to a respective to-be-encrypted operator of the at least one to-be-encrypted operator based on a data volume adjustment coefficient and a total data volume corresponding to a type of the respective to-be-encrypted operator.

The weight subsequence determining module 730 is configured for determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator.

The weight subsequence encrypting module 740 is configured for encrypting the to-be-encrypted target subsequence of weights based on a mode of encryption of the respective to-be-encrypted operator and the information on the position of the to-be-encrypted target subsequence of weights.

In some embodiments, the operator determining module 710 is specifically configured for:
determining a level of encryption corresponding to an operator in the neural network model; and
determining an operator in the neural network model which corresponds to a level of encryption meeting a preset encryption level condition to be the at least one to-be-encrypted operator.

In some embodiments, the data volume adjustment coefficient includes at least one of a data volume compression coefficient and a coefficient of importance of the respective to-be-encrypted operator, and the data volume determining module 720 is specifically configured for:
determining a product of the total data volume corresponding to the type of the respective to-be-encrypted operator and the data volume compression coefficient and / or the coefficient of importance of the respective to-be-encrypted operator to be the to-be-encrypted data volume corresponding to the respective to-be-encrypted operator.

In some embodiments, the apparatus further includes:
an information obtaining module, configured for obtaining a target allowed duration of decryption and target decryption performance information corresponding to a runtime environment the neural network model is in; and
a compression coefficient determining module, configured for querying a prestored correspondence between decryption performance information, an allowed duration of decryption, and the data volume compression coefficient about the data volume compression coefficient corresponding to both the target decryption performance information and the target allowed duration of decryption.

In some embodiments, the information on the position of the to-be-encrypted target subsequence of weights includes a starting position and a sequence length of the to-be-encrypted target subsequence of weights, and the weight subsequence determining module 730 specifically includes:
a sequence length determining unit, configured for determining the sequence length of the to-be-encrypted target subsequence of weights based on the to-be-encrypted data volume corresponding to the respective to-be-encrypted operator and the number of subsequences of weights corresponding to the respective to-be-encrypted operator; and
a starting position determining unit, configured for determining the starting position of the to-be-encrypted target subsequence of weights in the sequence of weights corresponding to the respective to-be-encrypted operator based on a preset starting position determining rule and the sequence length of the to-be-encrypted target subsequence of weights.

In some embodiments, the apparatus further includes:
an information encrypting module, configured for encrypting the mode of encryption of the respective to-be-encrypted operator and the information on the position of the to-be-encrypted target subsequence of weights, and storing the encrypted mode of encryption of the respective to-be-encrypted operator and the encrypted information on the position of the to-be-encrypted target subsequence of weights in model description information which describes the neural network model.

In some embodiments, the apparatus further includes:
an information decrypting module, configured for decrypting the encrypted mode of encryption of the respective to-be-encrypted operator and the encrypted information on the position of the to-be-encrypted target subsequence of weights stored in the model description information; and
an operator decrypting module, configured for decrypting the encrypted target subsequence of weights in the sequence of weights corresponding to the respective to-be-encrypted operator based on the mode of encryption of the respective to-be-encrypted operator and the information on the position of the to-be-encrypted target subsequence of weights.

In some embodiments, the information on the position of the to-be-encrypted target subsequence of weights includes a starting position and a sequence length of the to-be-encrypted target subsequence of weights, and the operator decrypting module is specifically configured for:
determining the encrypted target subsequence of weights in the sequence of weights corresponding to the respective to-be-encrypted operator based on the starting position and the sequence length of the to-be-encrypted target subsequence of weights; and
decrypting the encrypted target subsequence of weights based on the mode of encryption of the respective to-be-encrypted operator.

For beneficial technical effects corresponding to the illustrative embodiments of this apparatus, one may refer to the respective beneficial technical effects in the "Illustrative method" section described above, which are not repeated here. Processing performed by the operator determining module 710, the data volume determining module 720, the weight subsequence determining module 730, and the weight subsequence encrypting module 740 contained in the apparatus 700 for encrypting a model may each be implemented through a processor in an electronic device.

### Illustrative electronic device

FIG. 8 is a diagram of a structure of an electronic device according to embodiments of this disclosure, including at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, flash memory, etc. One or more computer program instructions may be stored on the computer readable storage medium. The processor 11 may execute one or more of the program instructions to implement the method for encrypting a model according to the various embodiments of this disclosure that are described above, and/or other desired functions.

In an example, the electronic device 10 may further include an input device 13 and an output device 14. These components are connected to each other through a bus system and/or another form of connection mechanism (not shown).

The input device 13 may further include, for example, a keyboard, a mouse, etc.

The output device 14 may output various information to the outside, and may include, for example, a display, a speaker, a printer, a communication network, and a remote output device connected to the communication network, etc.

Of course, for simplicity, FIG. 8 shows only some of components in the electronic device 10 that are related to this disclosure, and components such as a bus and an input/output interface are omitted. In addition, according to specific application situations, the electronic device 10 may further include any other appropriate components.

### Illustrative computer program product and computer-readable storage medium

In addition to the foregoing method and device, embodiments of this disclosure may also relate to a computer program product, which includes computer program instructions. When the instructions are run by a processor, the processor is enabled to perform the steps, of the method for encrypting a model according to the embodiments of this disclosure, that are described in the "Illustrative method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of this disclosure may further relate to a computer readable storage medium, which stores computer program instructions. When the computer program instructions are run by a processor, the processor is enabled to perform the steps, of the method for encrypting a model according to the embodiments of this disclosure, that are described in the "Illustrative method" section as described above.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure also intends to include these modifications and variations.

## Claims

1. A method for encrypting a model, including:
determining (101) at least one to-be-encrypted operator in a neural network model;
determining (102) a to-be-encrypted data volume corresponding to a respective to-be-encrypted operator of the at least one to-be-encrypted operator based on a data volume adjustment coefficient and a total data volume corresponding to a type of the respective to-be-encrypted operator;
determining (103) information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator; and
encrypting (104) the to-be-encrypted target subsequence of weights based on a mode of encryption of the respective to-be-encrypted operator and the information on the position of the to-be-encrypted target subsequence of weights.

2. The method according to claim 1, wherein the determining at least one to-be-encrypted operator in a neural network model includes:
determining (1011) a level of encryption corresponding to an operator in the neural network model; and
determining (1012) an operator in the neural network model which corresponds to a level of encryption meeting a preset encryption level condition to be the at least one to-be-encrypted operator.

3. The method according to claim 1, wherein the data volume adjustment coefficient includes at least one of a data volume compression coefficient and a coefficient of importance of the respective to-be-encrypted operator, and the determining a to-be-encrypted data volume corresponding to a respective to-be-encrypted operator of the at least one to-be-encrypted operator based on a data volume adjustment coefficient and a total data volume corresponding to a type of the respective to-be-encrypted operator includes:
determining a product of the total data volume corresponding to the type of the respective to-be-encrypted operator and the data volume compression coefficient and / or the coefficient of importance of the respective to-be-encrypted operator to be the to-be-encrypted data volume corresponding to the respective to-be-encrypted operator.

4. The method according to claim 3, further including:
obtaining a target allowed duration of decryption and target decryption performance information corresponding to a runtime environment the neural network model is in; and
querying a prestored correspondence between decryption performance information, an allowed duration of decryption, and the data volume compression coefficient about the data volume compression coefficient corresponding to both the target decryption performance information and the target allowed duration of decryption.

5. The method according to claim 1, wherein the information on the position of the to-be-encrypted target subsequence of weights includes a starting position and a sequence length of the to-be-encrypted target subsequence of weights, and the determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator includes:
determining (1031) the sequence length of the to-be-encrypted target subsequence of weights based on the to-be-encrypted data volume corresponding to the respective to-be-encrypted operator and the number of subsequences of weights corresponding to the respective to-be-encrypted operator; and
determining (1032) the starting position of the to-be-encrypted target subsequence of weights in the sequence of weights corresponding to the respective to-be-encrypted operator based on a preset starting position determining rule and the sequence length of the to-be-encrypted target subsequence of weights.

6. The method according to claim 1, further including:
encrypting the mode of encryption of the respective to-be-encrypted operator and the information on the position of the to-be-encrypted target subsequence of weights, and storing the encrypted mode of encryption of the respective to-be-encrypted operator and the encrypted information on the position of the to-be-encrypted target subsequence of weights in model description information which describes the neural network model.

7. The method according to claim 6, further including:
decrypting (501) the encrypted mode of encryption of the respective to-be-encrypted operator and the encrypted information on the position of the to-be-encrypted target subsequence of weights stored in the model description information; and
decrypting (502) the encrypted target subsequence of weights in the sequence of weights corresponding to the respective to-be-encrypted operator based on the mode of encryption of the respective to-be-encrypted operator and the information on the position of the to-be-encrypted target subsequence of weights.

8. The method according to claim 7, wherein the information on the position of the to-be-encrypted target subsequence of weights includes a starting position and a sequence length of the to-be-encrypted target subsequence of weights, and the decrypting the encrypted target subsequence of weights in the sequence of weights corresponding to the respective to-be-encrypted operator based on the mode of encryption of the respective to-be-encrypted operator and the information on the position of the to-be-encrypted target subsequence of weights includes:
determining (5021) the encrypted target subsequence of weights in the sequence of weights corresponding to the respective to-be-encrypted operator based on the starting position and the sequence length of the to-be-encrypted target subsequence of weights; and
decrypting (5022) the encrypted target subsequence of weights based on the mode of encryption of the respective to-be-encrypted operator.

9. An apparatus (700) for encrypting a model, including:
an operator determining module (710), configured for determining at least one to-be-encrypted operator in a neural network model;
a data volume determining module (720), configured for determining a to-be-encrypted data volume corresponding to a respective to-be-encrypted operator of the at least one to-be-encrypted operator based on a data volume adjustment coefficient and a total data volume corresponding to a type of the respective to-be-encrypted operator;
a weight subsequence determining module (730), configured for determining information on a position of a to-be-encrypted target subsequence of weights in a sequence of weights corresponding to the respective to-be-encrypted operator based on the to-be-encrypted data volume corresponding to the respective to-be-encrypted operator and a number of subsequences of weights corresponding to the respective to-be-encrypted operator; and
a weight subsequence encrypting module (740), configured for encrypting the to-be-encrypted target subsequence of weights based on a mode of encryption of the respective to-be-encrypted operator and the information on the position of the to-be-encrypted target subsequence of weights.

10. The apparatus (700) according to claim 9, wherein the operator determining module (710) is specifically configured for:
determining a level of encryption corresponding to an operator in the neural network model; and
determining an operator in the neural network model which corresponds to a level of encryption meeting a preset encryption level condition to be the at least one to-be-encrypted operator.

11. The apparatus (700) according to claim 9, wherein the data volume adjustment coefficient includes at least one of a data volume compression coefficient and a coefficient of importance of the respective to-be-encrypted operator, and the data volume determining module (720) is specifically configured for:
determining a product of the total data volume corresponding to the type of the respective to-be-encrypted operator and the data volume compression coefficient and / or the coefficient of importance of the respective to-be-encrypted operator to be the to-be-encrypted data volume corresponding to the respective to-be-encrypted operator.

12. The apparatus (700) according to claim 9, wherein the information on the position of the to-be-encrypted target subsequence of weights includes a starting position and a sequence length of the to-be-encrypted target subsequence of weights, and the weight subsequence determining module (730) specifically includes:
a sequence length determining unit, configured for determining the sequence length of the to-be-encrypted target subsequence of weights based on the to-be-encrypted data volume corresponding to the respective to-be-encrypted operator and the number of subsequences of weights corresponding to the respective to-be-encrypted operator; and
a starting position determining unit, configured for determining the starting position of the to-be-encrypted target subsequence of weights in the sequence of weights corresponding to the respective to-be-encrypted operator based on a preset starting position determining rule and the sequence length of the to-be-encrypted target subsequence of weights.

13. The apparatus (700) according to claim 9, further including:
an information encrypting module, configured for encrypting the mode of encryption of the respective to-be-encrypted operator and the information on the position of the to-be-encrypted target subsequence of weights, and storing the encrypted mode of encryption of the respective to-be-encrypted operator and the encrypted information on the position of the to-be-encrypted target subsequence of weights in model description information which describes the neural network model.

14. A computer-readable storage medium, storing a computer program for implementing the method for encrypting a model according to any one of claims 1 to 8.

15. An electronic device (10), including:
a processor (11); and
a memory (12) configured for storing processor-executable instructions, wherein
the processor (11) is configured for reading and executing the processor-executable instructions in the memory (12) to implement the method for encrypting a model according to any one of claims 1 to 8.
